**Europäisches Patentamt**

(19) **European Patent Office**

**Office européen des brevets**

(11) Numéro de publication: **0 024 967**

**B1**

(12) **FASCICULE DE BREVET EUROPEEN**

(45) Date de publication du fascicule du brevet: **28.09.83**

(51) Int. Cl.³: **F 16 K 31/365, F 24 D 3/02**

(21) Numéro de dépôt: **80401122.9**

(22) Date de dépôt: **30.07.80**

(54) Installation de chauffage munie d'un robinet à actionnement manométrique.

(30) Priorité: **31.08.79 FR 7921841**

(43) Date de publication de la demande:
**11.03.81 Bulletin 81/10**

(45) Mention de la délivrance du brevet:
**28.09.83 Bulletin 83/39**

(84) Etats contractants désignés:
**DE FR GB IT**

(56) Documents cités:
**BE - A - 381 935**
**CH - A - 419 524**
**FR - A - 1 155 866**
**FR - A - 2 146 688**
**GB - A - 1 507 134**
**US - A - 1 768 305**
**US - A - 4 005 725**

(73) Titulaire: **Etablissements LEMOINE & Cie**
**34, rue du Dragon**
**F-75006 Paris (FR)**

(72) Inventeur: **Pouyet, Jean**
**34, rue du Dragon**
**F-75006 Paris (FR)**

(74) Mandataire: **Boireau, Jacques**
**SOCIETE INTERNATIONALE 19 rue de la Paix**
**F-75002 Paris (FR)**

Courier Press, Leamington Spa, England.

# Installation de chauffage munie d'un robinet à actionnement manométrique

L'invention concerne une installation de chauffage munie d'un robinet à actionnement manométrique et comportant des moyens de commande de celui-ci susceptibles de faire varier la pression du fluide caloporteur de ladite installation pour commander l'actionnement du robinet.

Il est avantageux, dans une installation de chauffage central, de pouvoir mettre en service ou couper les différents corps de chauffe à certaines heures choisies de la journée ou de la nuit. Par exemple, s'il s'agit d'une installation de chauffage d'un local industriel, ou d'un immeuble de bureaux, on peut désirer que certains seulement des corps de chauffe soient alimentés pendant la nuit pour conserver une chaleur minimum d'entretien dans les locaux et, au contraire, alimenter tous les corps de chauffe pendant la journée. Des installations connues dans lesquelles cette possibilité est offerte utilisent des robinets à actionnement électromécanique montés sur les conduits d'alimentation de certains corps de chauffe et pilotés pour être ouverts pendant des périodes prédéterminées, à partir d'une horloge de commande centralisée. Par conséquent, le coût de l'installation de chauffage central est augmenté du prix de tout un réseau électrique de commande et nécessite un entretien et des vérifications périodiques. Par ailleurs, le CH—A—419.524 décrit une installation de chauffage protégée contre les surpressions au moyen de clapets à fermeture automatique et le FR—A—1.155.866 décrit une vanne à actionnement manométrique.

L'invention est remarquable en ce qu'elle permet d'obtenir une commande à distance de certains corps de chauffe sans nécessiter un tel réseau électrique auxiliaire, puisqu'elle utilise la pression rendue volontairement variable, à un ou des niveaux prédéterminés, du fluide caloporteur de l'installation de chauffage elle-même pour actionner des robinets de commande spéciaux sensibles à cette pression.

Dans cet esprit, l'invention concerne donc une installation de chauffage comportant un circuit de circulation de fluide caloporteur sous pression et plusieurs corps de chauffe alimentés en fluide caloporteur par ledit circuit, caractérisée en ce qu'elle comporte des moyens pour établir au moins deux niveaux de pression différents dans ledit circuit de fluide caloporteur et en ce qu'au moins un corps de chauffe est connecté audit circuit par l'intermédiaire d'un robinet à actionnement manométrique à seuil dont les moyens de commande d'actionnement communiquent avec ledit circuit, ledit seuil étant choisi entre lesdits niveaux de pression.

L'invention sera mieux comprise et d'autres avantages de celle-ci apparaîtront mieux à la lumière de la description qui va suivre d'un robinet et d'une installation conformes à l'invention, donnée uniquement à titre d'exemple et faite en référence aux dessins non limitatifs annexés, dans lesquels:

la figure 1 est une vue schématique d'une installation de chauffage central conforme à l'invention;

la figure 2 est une vue schématique en coupe d'un robinet de corps de chauffe conforme à l'invention; et

la figure 3 est un graphe illustrant un exemple de mise en oeuvre de l'installation de la figure 1, pendant une période de 24 heures.

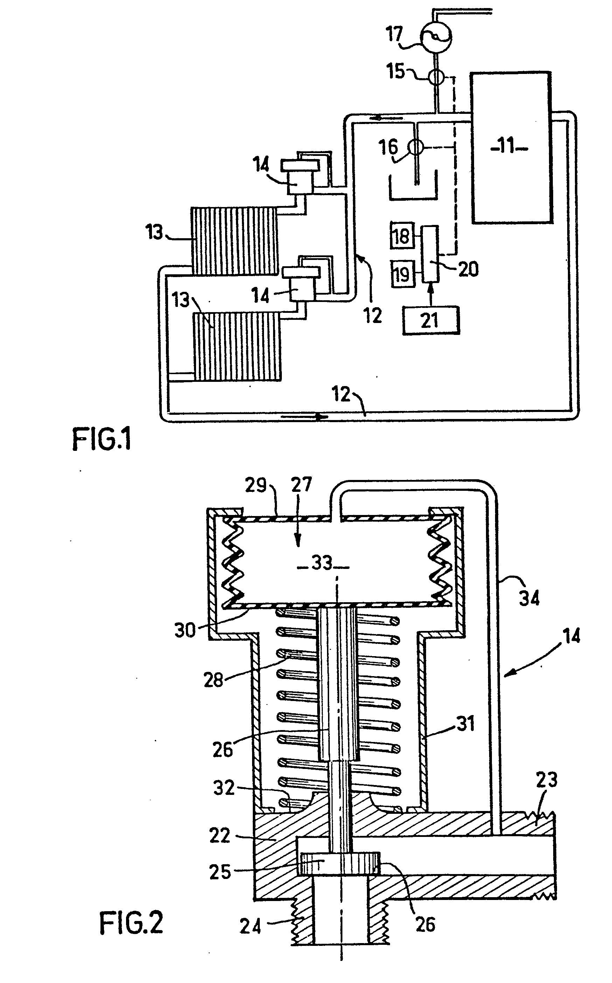

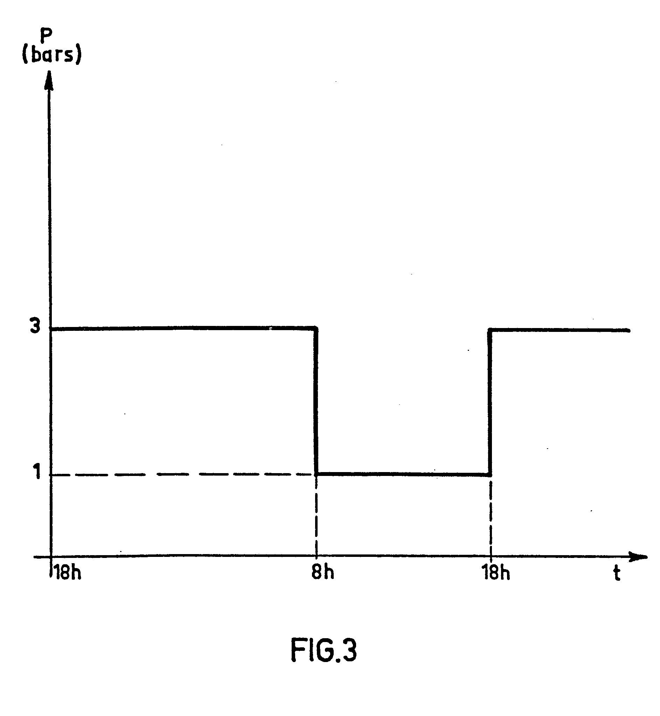

Sur la figure 1, on a représenté une installation de chauffage central comportant une chaudière 11 alimentant un circuit de circulation de fluide caloporteur sous pression 12, de l'eau dans l'exemple décrit, comportant un certain nombre de corps de chauffe 13. L'alimentation de certains corps de chauffe au moins se fait par l'intermédiaire de robinets 14 dont l'un est décrit plus en détail à la figure 2. La pression de l'eau qui circule dans le circuit 12 peut être réglée à plusieurs valeurs différentes. Dans ce but, l'installation peut comporter une vanne de remplissage 15 et une vanne de décharge 16; une pompe 17, pouvant injecter de i'eau dans le circuit 12 par l'intermédiaire de la vanne de remplissage 15. Ainsi, la commande des vannes 15 et 16 permet de régler la pression de l'eau dans le circuit 12 et ceci sous la commande de manostats 18 et/ou 19 connectés pour piloter les vannes 15 et 16. Ces deux manostats sont réglés à des valeurs de pression de consigne différentes et un sélecteur 20 est branché entre les manostats et les deux vannes pour que ces dernières soient pilotées par l'un seulement des manostats et agissent pour régler la pression dans le circuit 12 qui correspond à la valeur de consigne imposée par ce manostat. Le sélecteur 20 est, par exemple, du type électromécanique piloté par une horloge 21 à sortie de commande électrique. Ainsi, si on se réfère à la figure 3 représentant la pression dans le circuit 12 en fonction du temps $t$ et si le manostat 18 est, par exemple, réglé à une valeur de consigne de 1 bar tandis que le manostat 19 est réglé à une valeur de consigne de 3 bars, on comprend que l'horloge 21 est programmée pour actionner le sélecteur 20 dans sa position reliant le manostat 18 aux vannes 15 et 16 entre 8 heures et 18 heures et pour actionner le sélecteur dans sa position mettant en circuit le manostat 19, le reste du temps. Autrement dit, la pression de l'eau de chauffage dans le circuit 12 est de 1 bar entre 8 heures et 18 heures, c'est-à-dire pendant la période de temps où les locaux à chauffer sont occupés, et de 3 bars en dehors de cette période.

Le robinet 14 représenté sur la fig. 2 peut être défini comme un robinet à actionnement manométrique à seuil, dont les moyens de commande d'actionnement communiquent avec le circuit de circulation de fluide. Ce robinet est essentiellement constitué d'un élément de conduit 22 comportant deux embouts, un embout d'entrée 23 et un embout de sortie 24 (pour le raccordement au circuit 12 et au corps de chauffe, respectivement), séparés par un clapet 25 mobile par rapport à un siège 26 ménagé dans ledit élément de conduit 22. Le siège 26 est agencé à un coude de l'élément de conduit 22 et le clapet 25 comporte une tige de commande 26, solidaire d'un moyen d'actionnement manométrique à seuil comportant un soufflet 27 et un ressort 28. Le soufflet 27 comporte une paroi fixe 29 solidaire d'un boîtier 31 monté sur l'élément de conduit 22 et une paroi mobile 30, à laquelle est fixée la tige 26. Le ressort 28 est monté en compression entre la paroi mobile 30 et une surface de butée fixe 32 de l'élément de conduit 22. La chambre de pression 33 du soufflet, définie par l'espace interne de ce dernier, est en communication avec l'élément de conduit 22, par l'intermédiaire d'un tuyau 34 débouchant dans l'élément de conduit 22, au voisinage de l'embout d'entrée 23, c'est-à-dire en amont du siège 26 si on considère le sens de circulation du fluide caloporteur lorsque le robinet 14 est inséré dans le circuit 12 de la figure 1.

Le fonctionnement du système est des plus simples et découle avec évidence de la description qui précède. On comprend que le ressort 28 agit sur le soufflet 27 à l'encontre de la pression de l'eau qui circule dans le circuit 12. Bien entendu, la raideur du ressort 28 et la surface de la paroi 30 sont calculées pour que le clapet 25 ne vienne en appui de fermeture contre le siège 26 que lorsque la pression de l'eau de chauffage en circulation dépasse une certaine valeur comprise, dans l'exemple décrit, entre 1 et 3 bars. Par conséquent, lorsque la manostat 18 pilote les vannes 15 et 16 et que le pression dans le circuit 12 n'est que de 1 bar, le ressort 28 a une force suffisante pour repousser la paroi mobile 30 vers le haut en considérant la figure 2, et le clapet 25 n'est pas en appui sur son siège. En revanche, lorsque le manostat 19 entre en service et qu'il règle la pression dans le circuit 12 à 3 bars, le robinet est fermé et le corps de chauffe 13 correspondant n'est plus alimenté. De tels robinets sont utilisables aussi dans des installations de chauffage à un seul circuit, mais desservant des locaux utilisés à des heures différentes. On peut prévoir en outre un plus grand nombre de manostats et un plus grand nombre correspondant de robinets 14 semblables, mais réglés à des valeurs de pression différentes en changeant simplement, par exemple, la tension des ressorts utilisés. Dans ces conditions, on peut envisager de commander l'alimentation d'un plus grand nombre de groupes de corps de chauffe à des heures différentes.

L'invention n'est pas limitée au seul type d'installation et de robinet qui vient d'être décrit. En particulier, en ce qui concerne le robinet, il est évident qu'une autre disposition du clapet et/ou de ses moyens de commande, permettrait de réaliser l'ouverture du robinet par augmentation de pression. C'est dire que l'invention couvre tous les équivalents techniques des moyens mis en jeu, si ceux-ci le sont dans le cadre des revendications qui suivent.

**Revendications**

1. Installation de chauffage comportant un circuit de circulation de fluide caloporteur sous pression (12) et plusieurs corps de chauffe (13) alimentés en fluide caloporteur par ledit circuit, caractérisée en ce qu'elle comporte des moyens (15, 16, 18, 19) pour établir au moins deux niveaux de pression différents dans ledit circuit de fluide caloporteur et en ce qu'au moins un corps de chauffe (13) est connecté audit circuit par l'intermédiaire d'un robinet à actionnement manométrique à seuil (14) dont les moyens de commande d'actionnement (14, 33) communiquent avec ledit circuit, ledit seuil étant choisi entre lesdits niveaux de pression.

2. Installation selon la revendication 1, caractérisée en ce que lesdits moyens pour établir au moins deux niveaux de pression différents dans ledit circuit comportent une vanne de remplissage (15) et une pompe (17) et une vanne de décharge (16) branchées audit circuit et pilotées par une horloge (21).

3. Installation selon la revendication 1 ou 2, caractérisée en ce que ledit robinet comporte un clapet (25) mobile par rapport à un siège (26) et solidaire d'une partie mobile (30) d'un soufflet (27) dont la chambre de pression (33) est reliée audit circuit en amont dudit siège.

4. Installation selon la revendication 3, caractérisée en ce que ledit clapet est sollicité en éloignement dudit siège par un ressort (28).

5. Installation selon la revendication 4, caractérisée en ce que ledit ressort est monté en compression entre une surface de butée fixe (32) et ladite partie mobile dudit soufflet (30).

**Patentansprüche**

1. Heizungsanlage mit einem Kreislauf (12) eines unter Druck stehenden Wärmeträgers und mehreren Wärmetauschern (13), die von dem Wärmeträger durchströmt sind, dadurch gekennzeichnet, daß sie Einrichtungen (15, 16, 18, 19) zum Festlegen wenigstens zweier unterschiedlicher Druckwerte in dem Kreislauf enthält und daß wenigstens ein Wärmetauscher (13) mit dem Kreislauf mittels eines manometrisch betätigten Schwellwertventils (14) verbunden ist, dessen Betätigungseinrichtung (14, 33) mit dem Kreislauf (12) verbunden ist und dessen Schwellwert zwischen den beiden vorerwähnten Druckwerten liegt.

2. Anlage nach Anspruch 1, dadurch gekennzeichnet, daß die Einrichtungen zum Festlegen der zwei unterschiedlichen Druckwerte im Kreislauf ein Füllventil (15), eine Pumpe (17) und ein Ableitventil (16) enthält, die von dem Kreislauf abzweigen und die von einer Uhr (21) gesteuert sind.

3. Anlage nach Anspruch 1 oder 2, dadurch gekennzeichnet, daß das Schwellwertventil einen gegenüber einem Sitz (26) beweglichen Schiebar (25) enthält, der mit einem beweglichen Teil (30) eines Balges (27) fest verbunden ist, dessen Druckkammer (33) mit dem Kreislauf (12) stromaufwärts von dem Sitz (26) verbunden ist.

4. Anlage nach Anspruch 3, dadurch gekennzeichnet, daß der Schiebar (25) unter der Wirkung einer ihn von dem Sitz (26) wegdrückenden Feder (28) steht.

5. Anlage nach Anspruch 4, dadurch gekennzeichnet, daß die Feder (28) als Druckfeder zwischen eine feste Abstützfläche (32) und das bewegliche Teil (30) des Balges (27) eingespannt ist.

**Claims**

1. A heating installation comprising a pressurized heat-carrying fluid circulation circuit (12) and several heating bodies (13) supplied with heat-carrying fluid by said circuit, characterized in that it comprises means (15, 16, 18, 19) for establishing at least two different pressure levels in said heat-carrying fluid circuit and in that at least one heating body (13) is connected to said circuit through a threshold manometric operating clock (14) whose operating control means (14, 33) communicate with said circuit, said threshold being chosen between said pressure levels.

2. The installation according to claim 1, characterized in that said means for establishing at least two different pressure levels in said circuit comprise a filling valve (15) and a pump (17) and a discharge valve (16) connected to said circuit and driven by a clock (21).

3. The installation according to claim 1 or 2, characterized in that said clock comprises a clapper valve (25) movable with respect to a seat (26) and integral with a moving part (30) of a bellows (27) whose pressure chamber (33) is connected to said circuit upstream of said seat.

4. The installation according to claim 3, characterized in that said clapper valve is urged away from said seat by a spring (28).

5. The installation according to claim 4, characterized in that said spring is compression mounted between a fixed thrust surface (32) and said moving part of said bellows (30).

FIG.1

FIG.2

FIG.3